# EUROPEAN PATENT APPLICATION

(11) **EP 4 852 560 A1**
(43) Date of publication of application: **09.12.2026**
(21) Application number: 24921410.7
(22) Date of filing: 03.09.2024
(51) Int. Cl.: H04W 72/0446

(54) **ENHANCED FRAME STRUCTURE CONFIGURATION METHODS, APPARATUSES, AND DEVICES, AND STORAGE MEDIUM**

(30) Priority: 04.02.2024 CN 202410158742
(71) Applicant: ZTE Corporation, Shenzhen, Guangdong 518057 (CN)
(72) Inventor: LI, Jian, Shenzhen, Guangdong 518057 (CN); LIU, Xing, Shenzhen, Guangdong 518057 (CN); WEI, Xingguang, Shenzhen, Guangdong 518057 (CN); HAN, Xianghui, Shenzhen, Guangdong 518057 (CN)
(74) Representative: Aipex B.V.
(86) International application number: PCT/CN2024/116600
(87) International publication number: WO 2025/161385

(57) **Abstract**

Provided are enhanced frame structure configuration methods, apparatuses, and devices and a storage medium. An enhanced frame structure configuration method includes: configuring (S510) enhanced frame structure length information in first signaling, where the enhanced frame structure length information includes information for indicating a time domain length of a radio frame; and sending (S520) the first signaling to a user equipment, UE.

## Description

This application claims priority to Chinese Patent Application No. 202410158742.0 filed with the China National Intellectual Property Administration (CNIPA) on Feb. 4, 2024, the disclosure of which is incorporated herein by reference in its entirety.

### TECHNICAL FIELD

The present application relates to the field of wireless communications and, in particular, to enhanced frame structure configuration methods, apparatuses, and devices and a storage medium.

### BACKGROUND

There are three frame structure configuration methods in fifth-generation (5G) new radio (NR) systems, which are a semi-static cell-specific frame structure configuration, a semi-static user equipment (UE)-specific frame structure configuration, and a dynamic group common frame structure configuration, respectively.

With the introduction of artificial intelligence (AI)/machine learning (ML) technologies, especially the prediction capability of AI/ML, traffic requests within a relatively long time can be predicted so that a frame structure configuration within a relatively long time range can be determined. However, the NR protocol imposes certain limitations on these three frame structure configurations when the frame structure configuration has a relatively long time range. For new traffic characteristics, the frame structure configurations in the NR protocol need to be enhanced, and the enhanced frame structure configurations can be applied to a sixth-generation mobile communication (6G) system.

### SUMMARY

Embodiments of the present application provide enhanced frame structure configuration methods, apparatuses, and devices and a storage medium, so as to support traffic with a flexible time domain length of a radio frame.

In a first aspect, an embodiment of the present application provides an enhanced frame structure configuration method. The method includes the following: enhanced frame structure length information is configured in first signaling, where the enhanced frame structure length information includes information for indicating a time domain length of a radio frame; and the first signaling is sent to a UE.

In a second aspect, an embodiment of the present application provides an enhanced frame structure configuration method. The method includes the following: first signaling sent by a base station is detected, where the first signaling is configured with enhanced frame structure length information, and the enhanced frame structure length information includes information for indicating a time domain length of a radio frame; and data receiving or data sending is performed based on the enhanced frame structure length information.

In a third aspect, an embodiment of the present application provides an enhanced frame structure configuration device including a memory and a processor.

The memory is configured to store a program. The processor is configured to execute the program to perform the enhanced frame structure configuration method according to any implementation of the first aspect.

In a fourth aspect, an embodiment of the present application provides an enhanced frame structure configuration device including a memory and a processor.

The memory is configured to store a program. The processor is configured to execute the program to perform the enhanced frame structure configuration method according to any implementation of the second aspect.

In a fifth aspect, an embodiment of the present application provides a non-volatile storage medium including a stored program, where the program is executed so that the enhanced frame structure configuration method according to any implementation of the first aspect or any implementation of the second aspect is performed.

### BRIEF DESCRIPTION OF DRAWINGS

FIG. 1 is a schematic diagram of a dual-period frame structure configuration.
FIG. 2 is a schematic diagram of a flexibly configurable frame structure.
FIG. 3 shows a table of slot formats under a normal cyclic prefix.
FIG. 4 is a schematic diagram of a slot format indication (SFI) signaling format.
FIG. 5 is a flowchart of an enhanced frame structure configuration method according to an embodiment of the present application.
FIG. 6 is a schematic diagram of an extended frame structure configuration according to an embodiment of the present application.
FIG. 7 is a schematic diagram of different downlink control information (DCI) format 2_0 signaling formats.
FIG. 8 is another flowchart of an enhanced frame structure configuration method according to an embodiment of the present application.
FIG. 9 is a schematic diagram of a blind detection periodicity of first signaling.
FIG. 10 is a diagram illustrating the structure of an enhanced frame structure configuration apparatus according to an embodiment of the present application.
FIG. 11 is a diagram illustrating the structure of an enhanced frame structure configuration apparatus according to an embodiment of the present application.
FIG. 12 is a diagram illustrating the structure of an enhanced frame structure configuration device according to an embodiment of the present application.
FIG. 13 is another diagram illustrating the structure of an enhanced frame structure configuration device according to an embodiment of the present application.

### DETAILED DESCRIPTION

Embodiments of the present application are described below in conjunction with the drawings. If not in collision, the embodiments of the present application and features therein may be combined with each other in any manner.

The three frame structure configurations in the NR systems are as follows:
1. A semi-static cell-specific frame structure configuration.
2. A semi-static UE-specific frame structure configuration.
3. A dynamic group common frame structure configuration.

The semi-static cell-specific frame structure configuration is configured via tdd-UL-DL-configurationCommmon signaling. The semi-static UE-specific frame structure configuration is configured via tdd-UL-DL-ConfigDedicated signaling. The dynamic group common frame structure configuration is downlink control information (DCI) format 2_0, that is, the slot format indication (SFI).

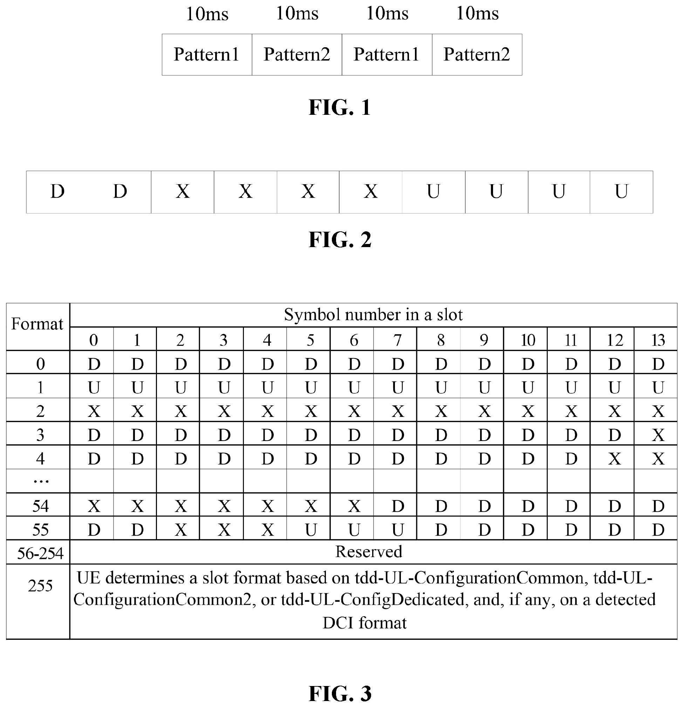

For a semi-static cell-specific frame structure, a slot configuration in NR is configured in the tdd-UL-DL-ConfigurationCommmon signaling and is cell-specific. That is to say, all UEs camping on a serving cell receive the same slot configuration. The tdd-UL-DL-ConfigurationCommmon signaling is included in system information blocks (SIBs) 1 and ReconfigurationWithSync. The content of the tdd-UL-DL-ConfigurationCommmon signaling is described below. TDD-UL-DL-Pattern defines two patterns: pattern1 and pattern2, where pattern2 is optional. The dl-UL-TransmissionPeriodicity field defines a periodicity of up to 10 ms. In a dual-period structure, the frame structure with two patterns is formed as shown in FIG. 1, where the maximum length of each pattern is 10 ms. FIG. 1 is a schematic diagram of a dual-period frame structure configuration. The maximum slot format length is 20 ms, and the maximum number of slots is 640, corresponding to a sub-carrier space (SCS) of 480 kHz. For example, the maxNrofSlots field below defines that the maximum number of slots within the maximum period of 10 ms is 320.

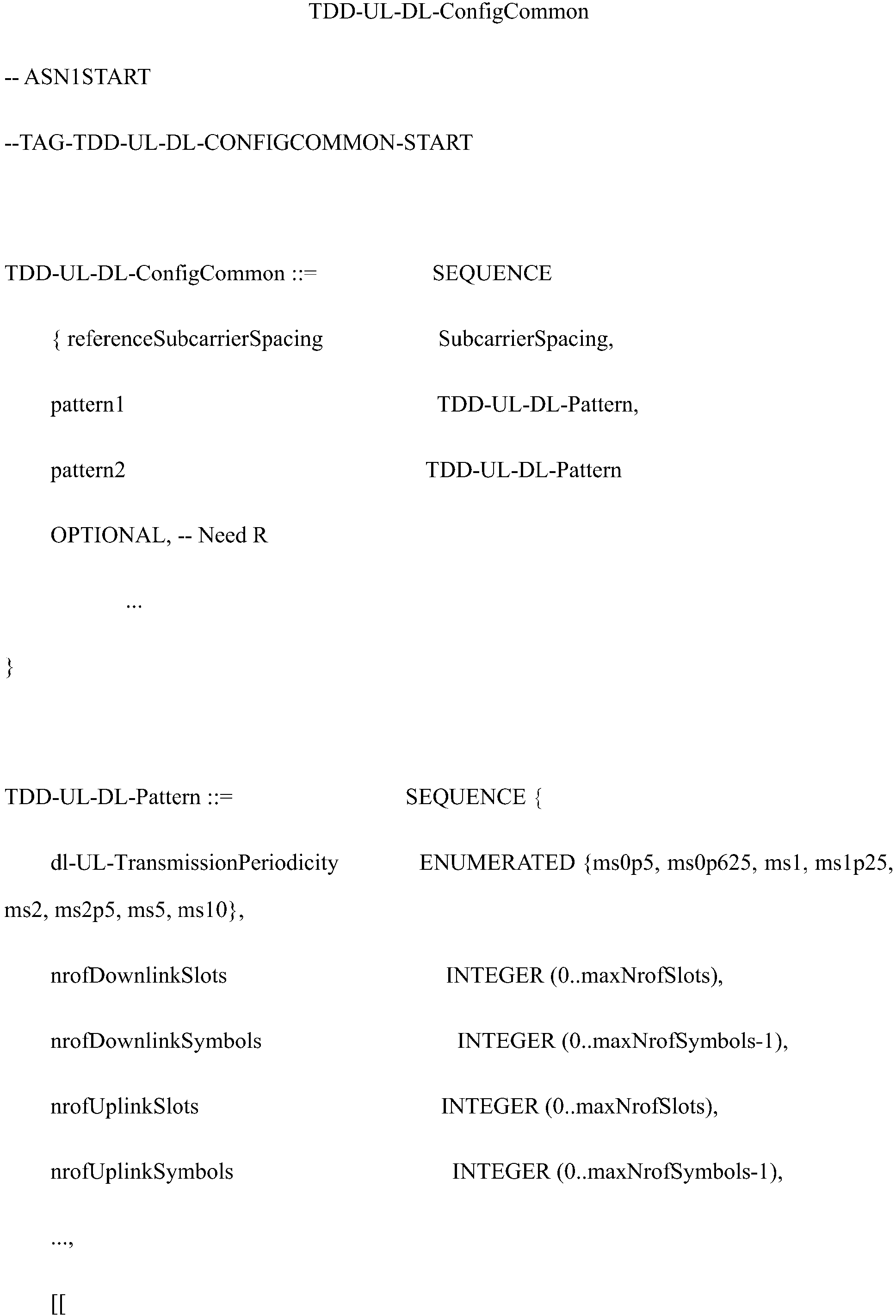

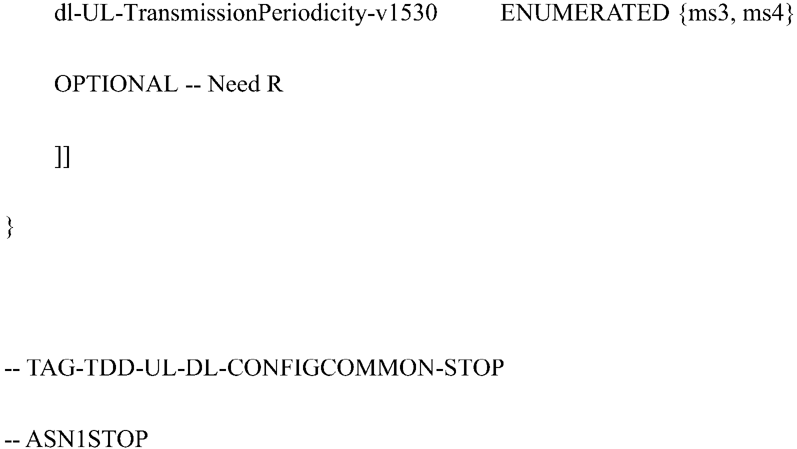

Configuration signaling of the number of symbols and the number of slots is illustrated below.

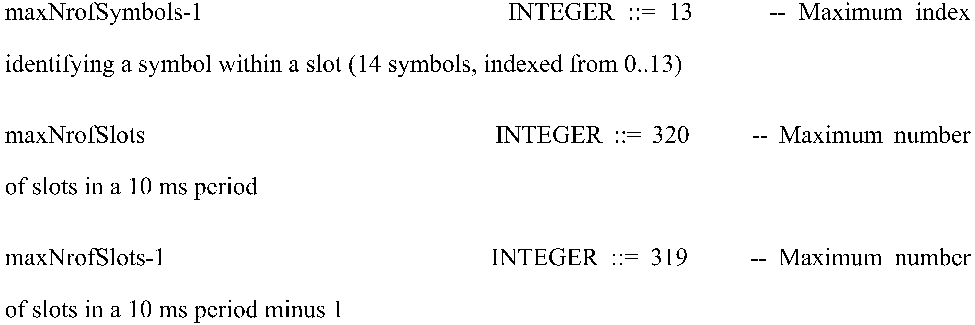

**Table 1 Number of orthogonal frequency-division multiplexing (OFDM) symbols in each slot, number of slots in each radio frame, and number of slots in each subframe under a normal cyclic prefix**

| µ | Number of Symbols in Each Slot | Number of Slots in Each Radio Frame | Number of Slots in Each Subframe |
|---|---|---|---|
| 0 | 14 | 10 | 1 |
| 1 | 14 | 20 | 2 |
| 2 | 14 | 40 | 3 |
| 3 | 14 | 80 | 4 |
| 4 | 14 | 160 | 16 |
| 5 | 14 | 320 | 32 |

**Table 2 Number of OFDM symbols in each slot, number of slots in each radio frame, and number of slots in each subframe under an extended cyclic prefix**

| µ | Number of Symbols in Each Slot | Number of Slots in Each Radio Frame | Number of Slots in Each Subframe |
|---|---|---|---|
| 2 | 12 | 40 | 4 |

As can be known from the preceding description, the frame structure configured via the tdd-UL-DL-ConfigurationCommmon signaling supports the maximum periodicity of 20 ms.

The semi-static UE-specific frame structure configuration is configured via the tdd-UL-DL-ConfigDedicated signaling. The specific signaling content is described below, where SlotIndex identifies a slot within a slot periodicity configured in the tdd-UL-DL-configurationCommon signaling. Meanwhile, it can be seen that a range of the frame structure configured via the tdd-UL-DL-ConfigDedicated signaling is not beyond the periodicity in tdd-UL-DL-configurationCommon. A value of tdd-UL-DL-SlotConfig is based on maxNrofSlots, and the maximum value of maxNrofSlots corresponds to 10 ms. The UE-specific configuration can only reconfigure slot/symbol X in the cell-specific configuration, as shown in FIG. 2. FIG. 2 is a schematic diagram of a flexibly configurable frame structure, where D represents a downlink frame, U represents an uplink frame, and X represents a flexibly configurable frame. Moreover, only a frame structure with a maximum periodicity of 10 ms can be modified via the TDD-UL-DL-ConfigDedicated signaling. Since the value of TDD-UL-DL-SlotConfig is based on maxNrofSlots and the maximum value of maxNrofSlots corresponds to 10 ms, modification cannot be performed for a dual-slot-pattern mode (a periodicity of 20 ms).

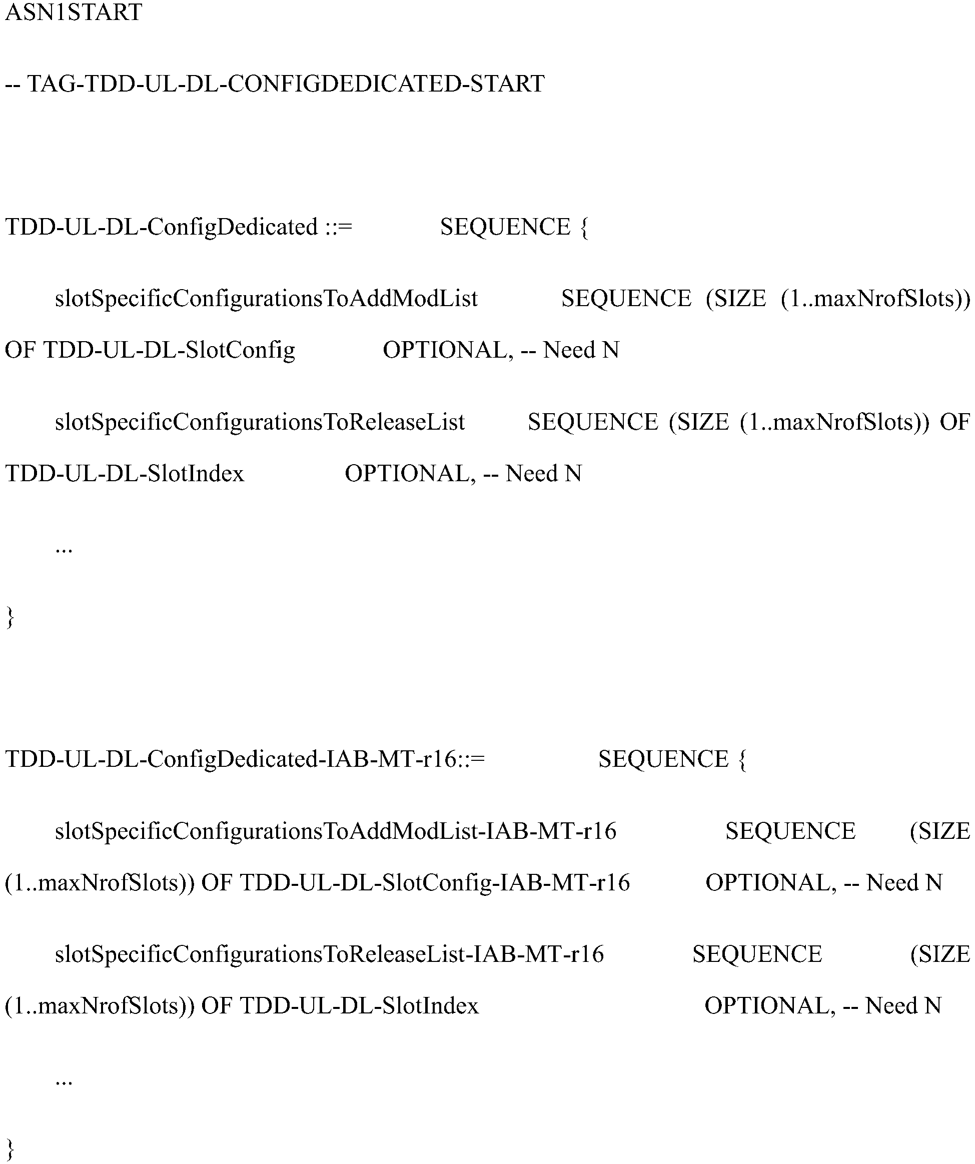

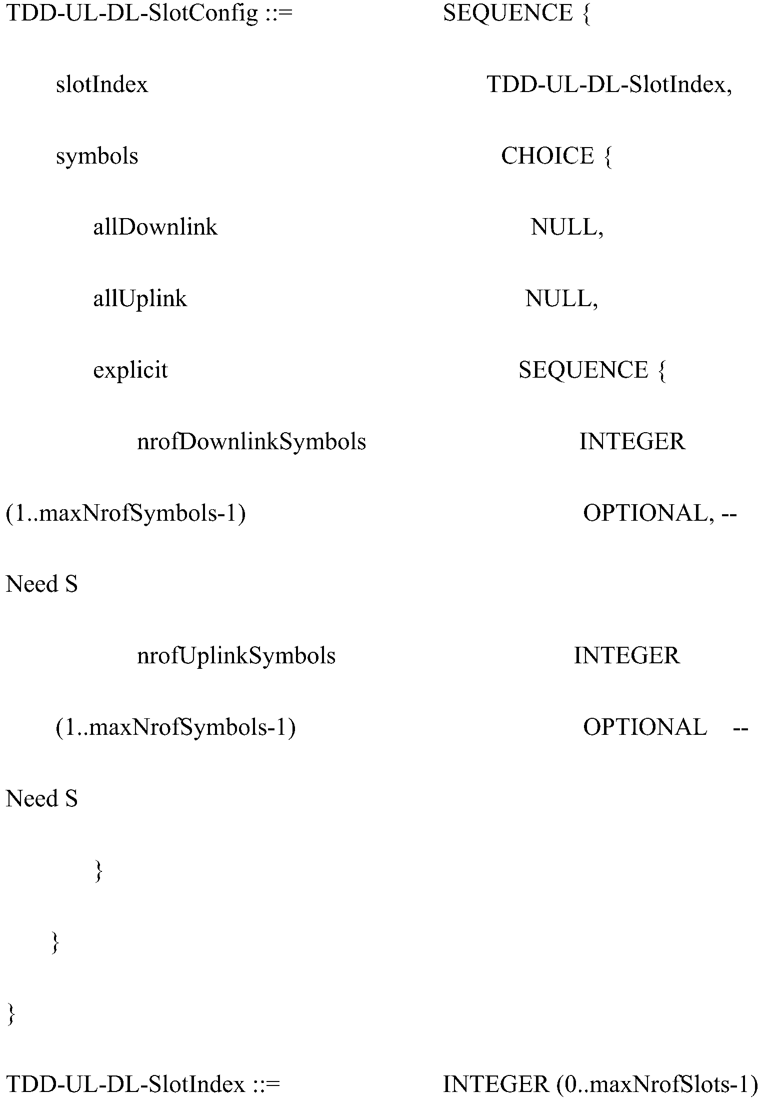

As can be known from the preceding description, the frame structure configured via the tdd-UL-DL-ConfigDedicated signaling supports a maximum periodicity of 10 ms and has a mismatch with the tdd-UL-DL-ConfigurationCommmon signaling, that is, a dual-period configuration is not supported.

For a dynamic frame structure configured via group common signaling, the SFI is an optional function. If a UE is to receive both a semi-static frame structure configuration and a dynamic frame structure configuration, the SFI is meaningful only for an "X" slot in the semi-static frame structure configuration. That is to say, the SFI can only reconfigure the slot X, as shown in FIG. 2.

A SlotFormatIndicator information element (IE) is used for configuring Group-Common-PDCCH for monitoring the SFI.

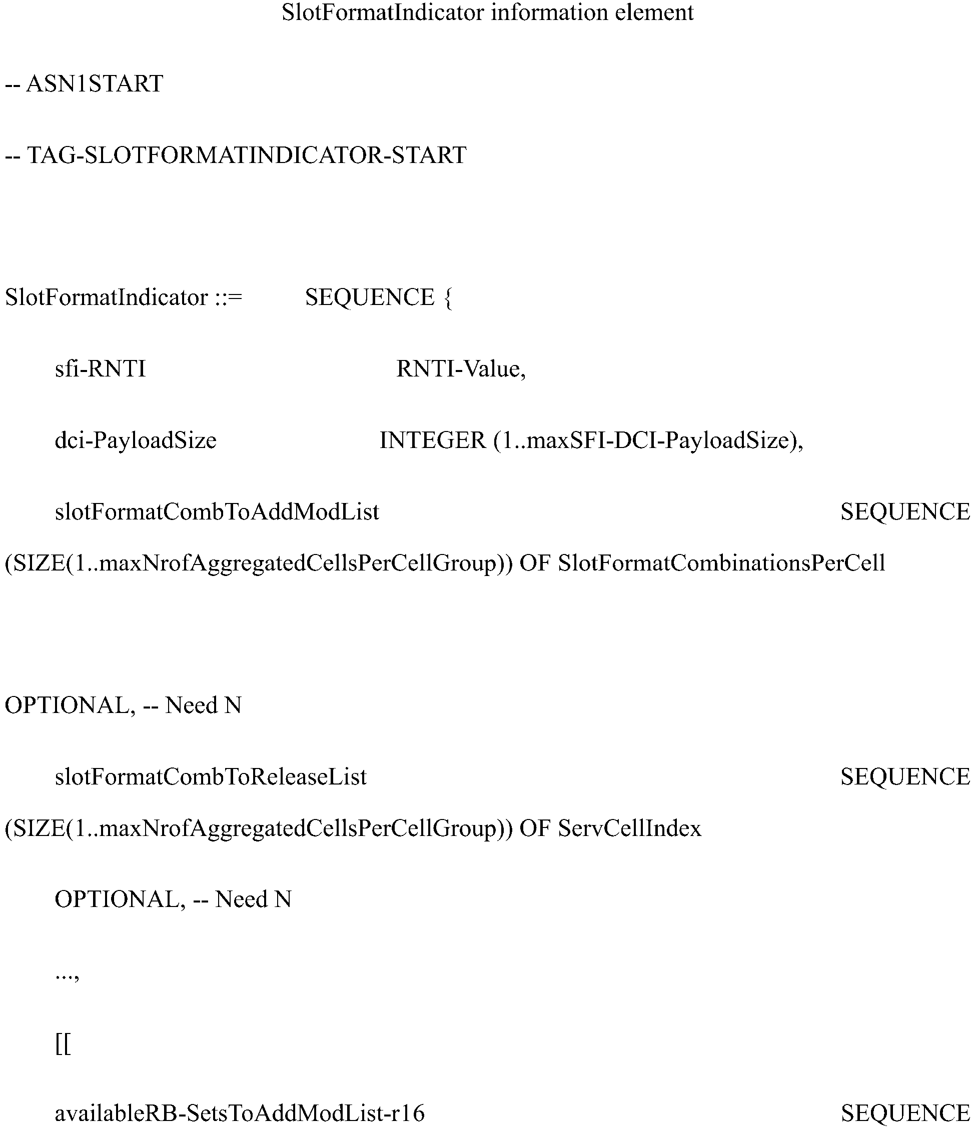

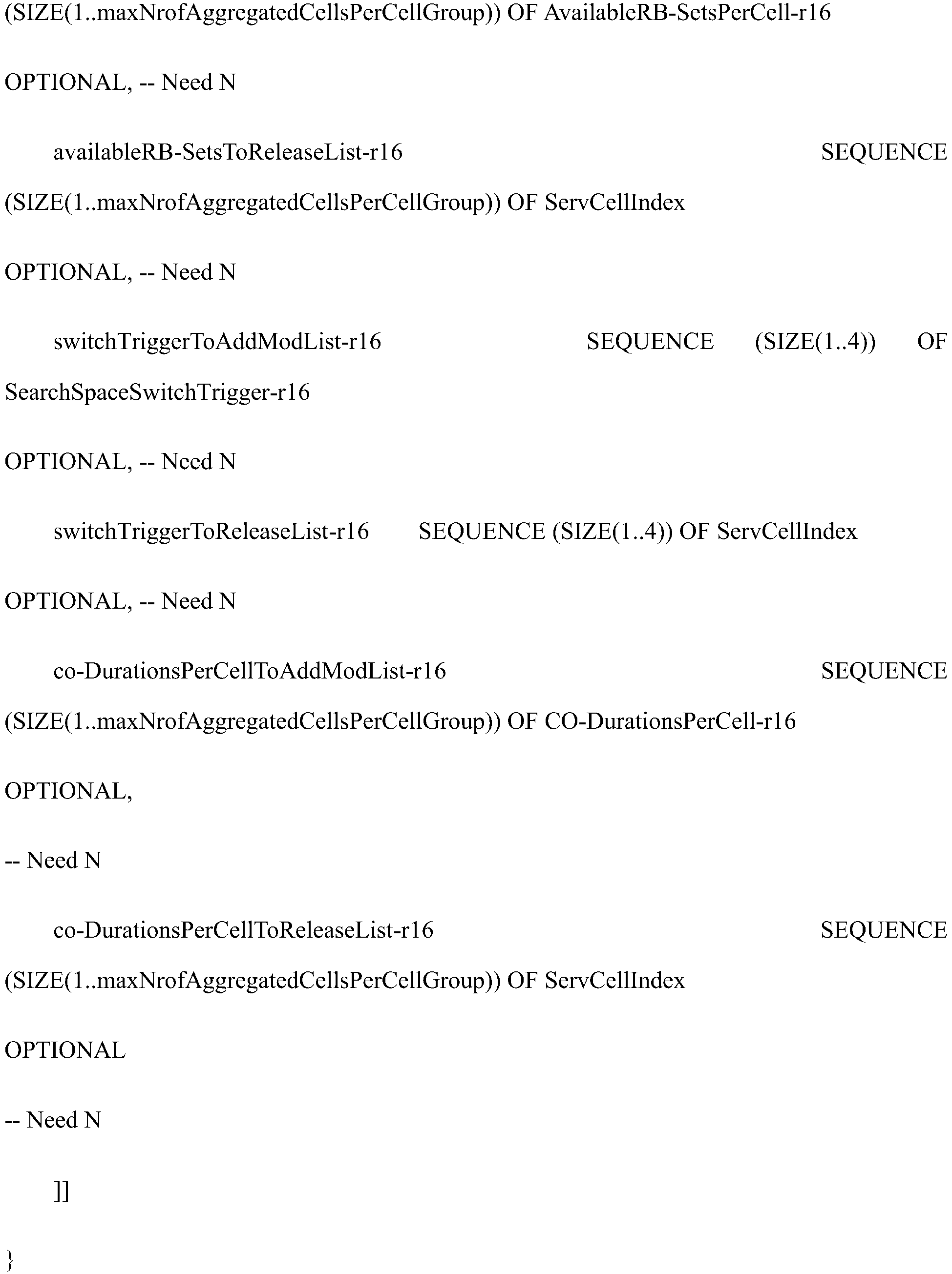

A SlotFormatCombinationsPerCell information element is used for configuring available slot format combinations (SlotFormatCombinations) of a serving cell.

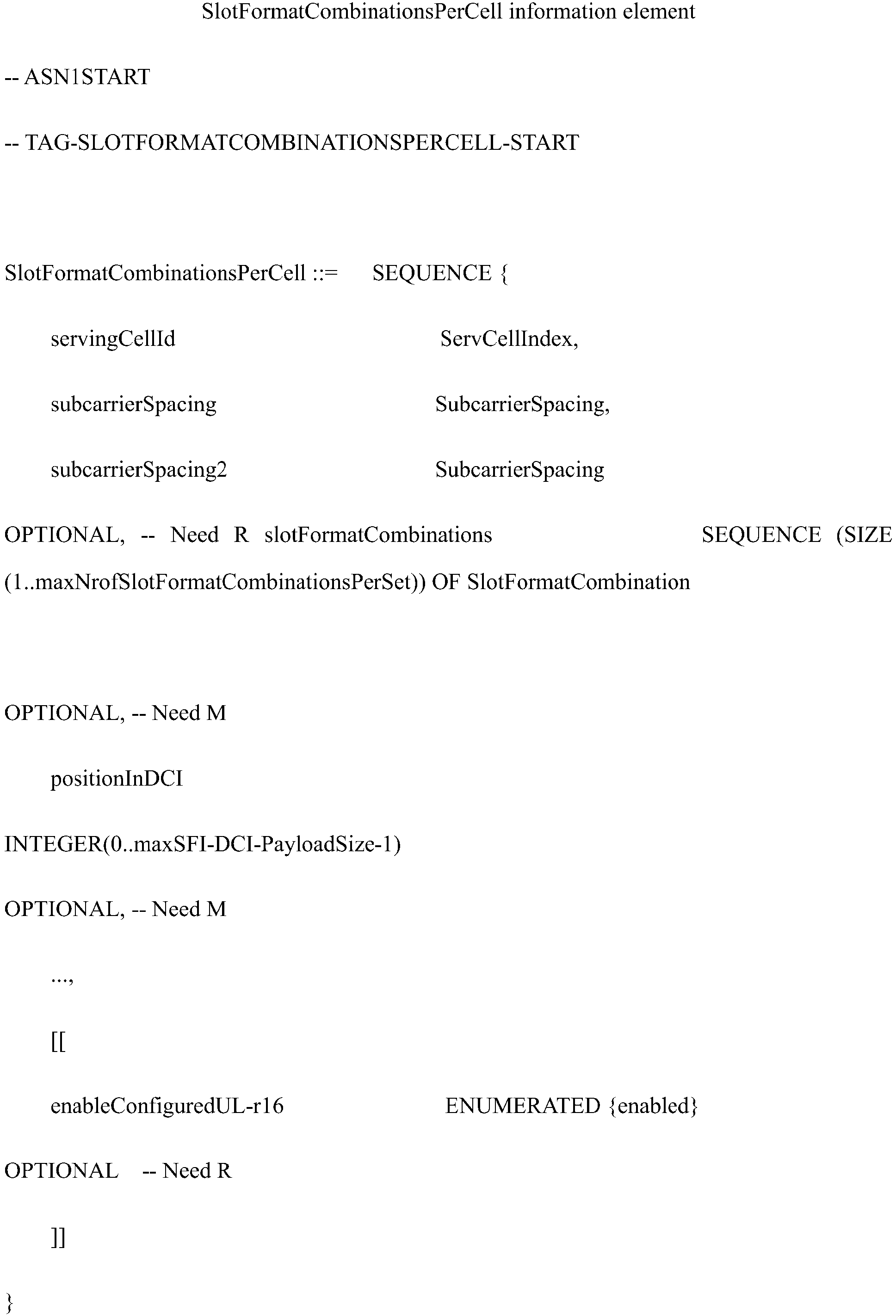

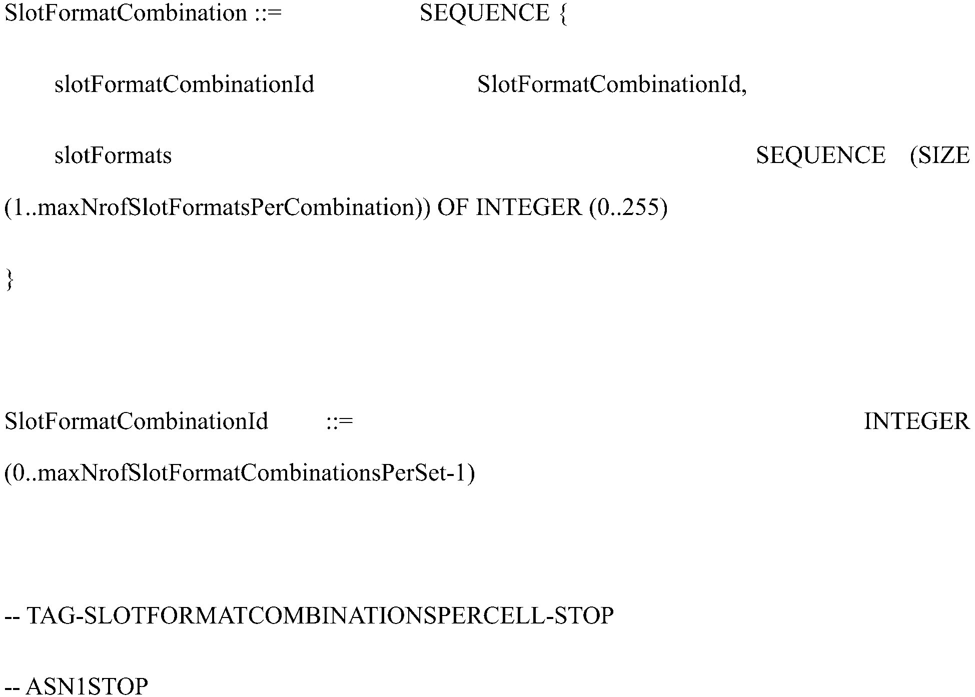

Each SlotFormatCombination corresponds to one combination identifier (CombinationId) and a group of slot formats. At most 512 SlotFormatCombinations (9 bits) can be configured, and at most 256 slot formats can be configured, as shown in FIG. 3. FIG. 3 shows a table of slot formats under a normal cyclic prefix. It can be seen that at most 256 frame structure configurations are provided.

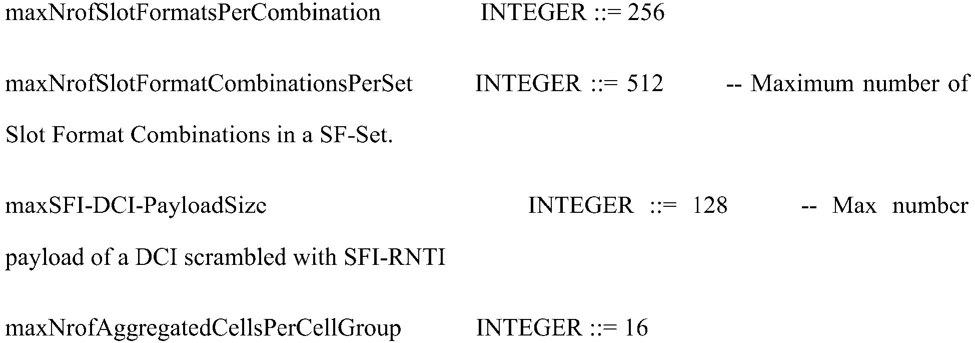

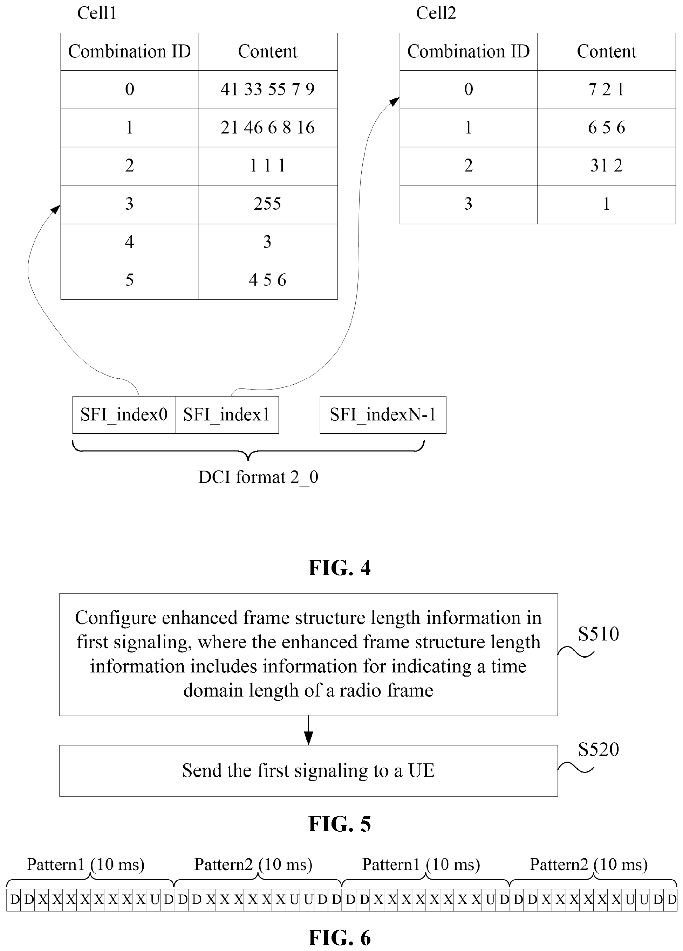

An SFI signaling format is, for example, shown in FIG. 4. FIG. 4 is a schematic diagram of the SFI signaling format. As can be seen from FIG. 4, DCI format 2_0 signaling includes N SFI indexes: SFI_index0 to SFI_indexN. Each SFI index is used for indicating a group of slot formats. For example, SFI_index0 indicates that, for cell 1 (Cell1), combination identifier 3 corresponds to slot format 255. The specific format content may be obtained by referring to the table shown in FIG. 3. SFI_index1 indicates that, for cell 2 (Cell2), combination identifier 0 corresponds to slot formats 7, 2, and 1, where the multiple slot formats may be configured cyclically, and the specific format content may be obtained by referring to the table shown in FIG. 3.

Additionally, the slot format length configured for a combination must be greater than an SFI monitoring periodicity. Therefore, frame structures within different periods may be indicated by SFIs sent within different periods. Assuming that AI/ML can predict a frame structure configuration within a relatively long time, the number of blind detections of the SFI can be reduced. Based on standards, a very large number of slot formats in each combination has to be configured through a radio resource control (RRC) message. However, as the number of slot formats in each combination increases, the number of combinations that can be formed also increases. Thus, when the group common signaling is used for a long-period configuration, signaling overheads or the number of blind detections may increase.

FIG. 5 is a flowchart of an enhanced frame structure configuration method according to an embodiment of the present application. As shown in FIG. 5, the enhanced frame structure configuration method of this embodiment includes S510 and S520.

In S510, enhanced frame structure length information is configured in first signaling, where the enhanced frame structure length information includes information for indicating a time domain length of a radio frame.

The enhanced frame structure configuration method of this embodiment is used for configuring an enhanced frame structure length for a UE, where the enhanced frame structure length is a more flexible time domain length of the radio frame, so that the radio frame can have a longer time domain length. With the introduction of AI/ML technologies, traffic within a longer time can be predicted based on the AI/ML technologies. Therefore, the radio frame is configured with the longer time domain length so that traffic scheduling can be more flexible. The enhanced frame structure configuration method of this embodiment is applied to a base station, and the base station configures the enhanced frame structure length for a UE and sends the enhanced frame structure length information to the UE via signaling.

The base station configures the enhanced frame structure length information in the first signaling, where the enhanced frame structure length information includes the information for indicating the time domain length of the radio frame. The first signaling may be any control signaling sent by the base station to the UE. Alternatively, the first signaling is signaling information carried in other forms in data sent by the base station to the UE. The enhanced frame structure length information may be carried in the first signaling in different forms. For example, a new field is configured in the first signaling, a new parameter value is configured in an existing field of the first signaling, or an additional dedicated region is set at the head of the first signaling. The enhanced frame structure length information is used for indicating the time domain length of the radio frame. As can be known from the preceding description, the frame structure length of the radio frame may be indicated in multiple forms such as a pattern, a time domain length, and a slot format combination. Therefore, in this embodiment, the enhanced frame structure length, that is, the longer time domain length of the radio frame, may be indicated through an extension of any one of the preceding indication forms of the radio frame structure length. In the following embodiments, various different indication methods for the enhanced frame structure length are described in detail. The enhanced frame structure length information is different from information for indicating the frame structure length in the current wireless communication system. The enhanced frame structure length information can indicate the radio frame with the longer time domain length and thus can support longer time domain traffic prediction.

The configuration of the enhanced frame structure length information in the first signaling may be triggered by the base station, that is, performed to match the long-period traffic prediction of the base station. AI/ML may be a UE-side model, that is, the UE performs traffic prediction. Moreover, the UE may estimate a long-period slot format and then feed back the estimated long-period slot format to the base station. After receiving prediction information about the long-period slot format from the UE, the base station configures the enhanced frame structure length information in the first signaling based on information fed back by UEs.

In S520, the first signaling is sent to the UE.

After configuring the enhanced frame structure length information in the first signaling, the base station may send the first signaling to the UE. Since the enhanced frame structure length information is configured in the first signaling, the UE that receives the first signaling can determine the time domain length of the radio frame based on the enhanced frame structure length information. Since the enhanced frame structure length information is more flexible than a conventional radio frame length indication in a 5G system and supports the longer time domain length, when the communication system uses the AI/ML technologies for traffic prediction within a longer time, the radio frame with the longer time domain length can be used to match a result of the longer time domain traffic prediction. Therefore, the enhanced frame structure configuration method of this embodiment provides support for traffic applications of a mobile communication system within a longer time range.

In the enhanced frame structure configuration method of this embodiment, the enhanced frame structure length information is configured in the first signaling, where the enhanced frame structure length information includes the information for indicating the time domain length of the radio frame, and then the first signaling is sent to the UE, so that a more flexible strategy for configuring the time domain length of the radio frame is provided, the radio frame with the longer time domain length can be supported, and traffic can be supported with a flexible time domain length of the radio frame.

For the preceding three NR frame structure configurations, the enhanced frame structure configuration method according to the embodiment of the present application may be implemented through extensions of signaling for these three NR frame structure configurations. That is to say, the first signaling is common signaling for configuring a semi-static cell-specific frame structure, the first signaling is dedicated signaling for configuring a semi-static UE-specific frame structure, or the first signaling is common signaling for configuring a dynamic dedicated frame structure. An enhanced frame structure length information field is added to the above signaling, or a field for indicating the time domain length of the radio frame in the above signaling is extended into the enhanced frame structure length information. Alternatively, the first signaling is newly added signaling specially used for indicating the enhanced frame structure length information. The manner of extending the signaling for configuring the current NR frame structure can be better compatible with the previous versions of NR signaling and reduce signaling overheads of an additional configuration.

The enhanced frame structure configuration method according to the embodiment of the present application is described below in detail in the case where the first signaling is different signaling.

When the first signaling is the common signaling for configuring the semi-static cell-specific frame structure, the enhanced frame structure length information includes the number N of patterns in an extended radio frame, where N is greater than 2.

The common signaling for configuring the semi-static cell-specific frame structure may be, for example, the preceding tdd-UL-DL-ConfigurationCommmon signaling. The preceding common signaling for configuring the semi-static cell-specific frame structure supports a configuration of at most two radio frame patterns. However, in the embodiment of the present application, the number N of patterns in the extended radio frame is configured in the common signaling for configuring the semi-static cell-specific frame structure, where N is greater than 2. That is, more than two radio frame patterns may be provided to support an indication of a frame structure with a longer radio frame length, for example, greater than 20 ms. Only an additional radio frame pattern configuration needs to be added as required at an original position where radio frame patterns are configured in the common signaling for configuring the semi-static cell-specific frame structure. Since the common signaling for configuring the semi-static cell-specific frame structure is a configuration for a serving cell, all UEs in the serving cell receive this signaling and obtain the enhanced frame structure length information.

When the first signaling is the dedicated signaling for configuring the semi-static UE-specific frame structure, the enhanced frame structure length information includes at least one of: the number M of patterns in an extended radio frame or time domain length information of the radio frame, where M is greater than or equal to 2.

The dedicated signaling for configuring the semi-static UE-specific frame structure may be, for example, the preceding tdd-UL-DL-ConfigDedicated signaling. In the dedicated signaling for configuring the semi-static UE-specific frame structure, the manner of configuring the number of patterns in the radio frame may also be used to indicate the enhanced frame structure length information, where the number of patterns in the extended radio frame is M, and M is greater than or equal to 2. Alternatively, in the dedicated signaling for configuring the semi-static UE-specific frame structure, the time domain length information of the radio frame is extended. Specifically, the number of radio frames may be configured. One radio frame occupies, for example, 10 ms in the time domain, and the number P of radio frames may be configured. For example, when P = 4, the slots X in a frame structure of continuous 40 ms can be reconfigured, as shown in FIG. 6. FIG. 6 is a schematic diagram of an extended frame structure configuration according to an embodiment of the present application, where D represents a downlink frame, U represents an uplink frame, and X represents a flexibly configurable frame. Alternatively, in the dedicated signaling for configuring the semi-static UE-specific frame structure, both the number M of patterns in the extended radio frame and the time domain length information of the radio frame may be configured.

The number of patterns in the extended radio frame is configured in a dedicated configuration or a serving cell configuration. That is to say, the number of patterns in the extended radio frame may be configured in a dedicated configuration for the UE, that is, configured only for a particular UE; or the number of patterns in the extended radio frame may be configured in the serving cell configuration, that is, configured for all the UEs in the serving cell.

The specific enhanced frame structure length information is illustrated below by using the tdd-UL-DL-ConfigDedicated signaling as an example.

A 10 ms boundary limit of the radio frame may be removed by a configuration of TDD-UL-DL-SlotIndex, and a configurable P value may be introduced, where TDD-UL-DL-SlotIndex ::= INTEGER (0..P*maxNrofSlots-1).

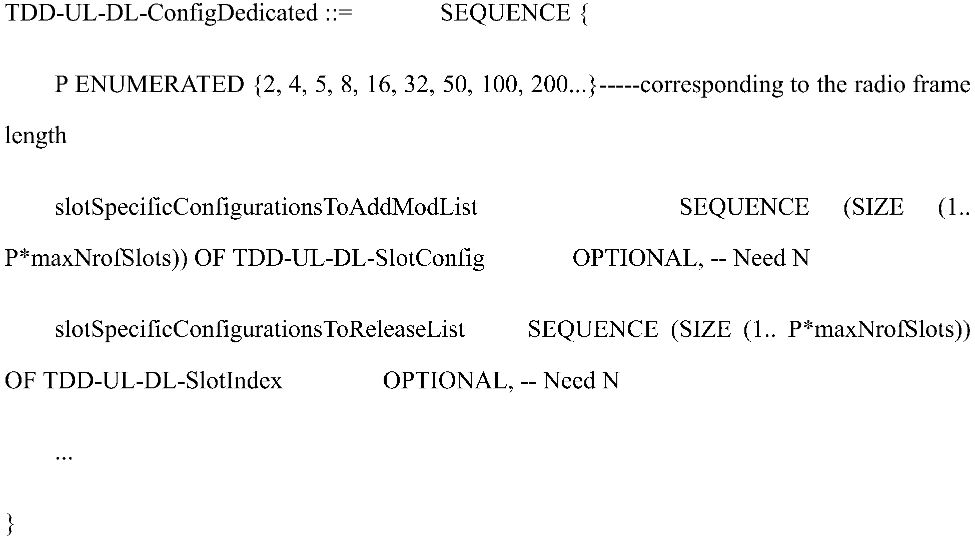

Alternatively, a pattern is added to the TDD-UL-DL-ConfigDedicated signaling, and the number of patterns is configurable. The signaling is dedicated signaling for the UE, as shown below:

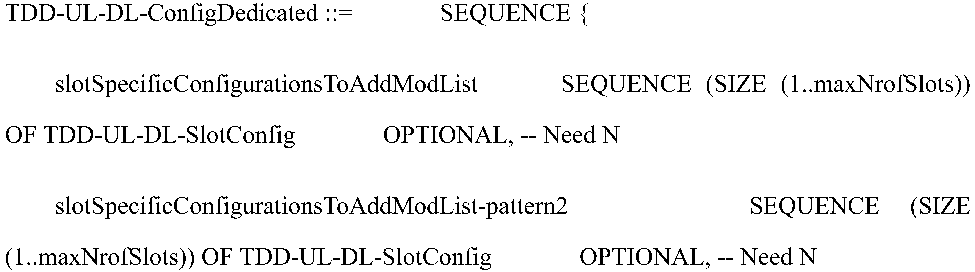

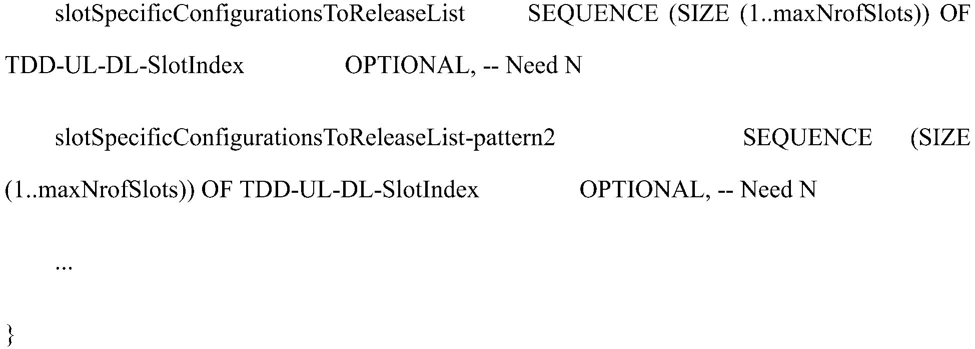

Alternatively, a pattern may be added to ServingCellConfig, and the number of patterns is configurable. The signaling is for the serving cell, as shown below:

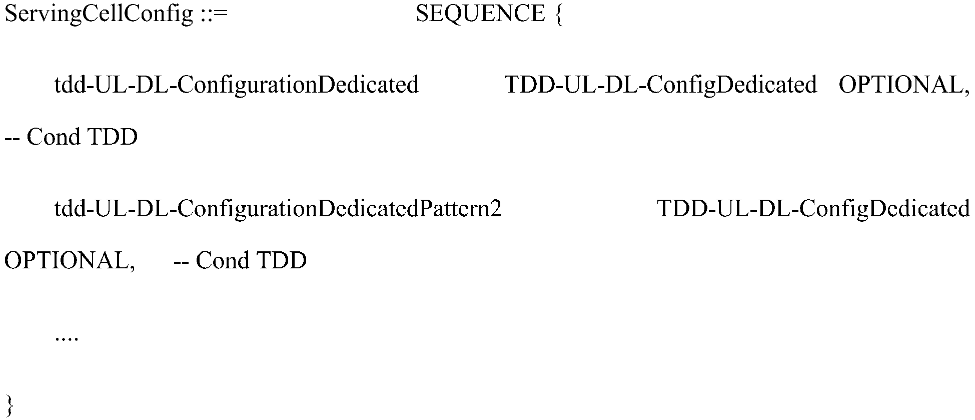

Since the dedicated signaling for configuring the semi-static UE-specific frame structure is configured for the UE, enhanced frame structures may be separately configured for different UEs, and a different UE may perform required traffic based on the time domain length of the radio frame indicated via the dedicated signaling configured for the different UE.

When the first signaling is the common signaling for configuring the dynamic dedicated frame structure (group common frame structure), the enhanced frame structure length information includes a periodicity or duration of an extended radio frame.

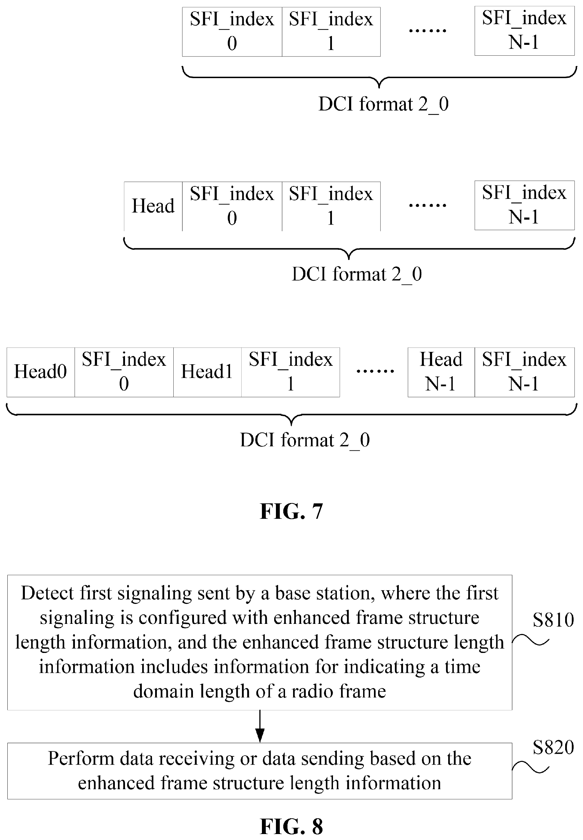

The common signaling for configuring the dynamic dedicated frame structure may be, for example, the preceding DCI format 2_0, that is, the SFI. In the common signaling for configuring the dynamic dedicated frame structure, indication information for indicating the periodicity or duration of the radio frame is added, where the indication information indicates the periodicity of one radio frame or the duration of one radio frame. The periodicity or duration of the extended radio frame is located in a dedicated head region of the first signaling. That is, a head region is added based on the original signaling, where the periodicity or duration of the extended radio frame is carried in the head region, and some other common information may also be notified in the newly added head region. The periodicity or duration of the extended radio frame in the dedicated head region of the first signaling is used for indicating a periodicity or duration of a slot format combination for one or more consecutive radio frames. That is, the periodicity or duration of the extended radio frame carried in one dedicated head region of the first signaling may be used to indicate a periodicity or duration of a slot format combination for one radio frame, or the periodicity or duration of the extended radio frame carried in one dedicated head region of the first signaling may be used to indicate a periodicity or duration of slot format combinations for multiple consecutive radio frames. As can be known from FIG. 3, the slot format combination for one radio frame is determined according to a format number. After the periodicity or duration of the extended radio frame is added, the slot format combinations for multiple consecutive radio frames may be indicated, that is, slot format numbers for multiple consecutive radio frames may be indicated. As shown in FIG. 7, FIG. 7 is a schematic diagram of different DCI format 2_0 signaling formats. It can be seen from the figure that the original DCI format 2_0 signaling includes N SFI indexes: SFI_index0 to SFI_indexN, and each SFI index is used for indicating a group of slot formats, as shown in FIG. 4. Extended DCI format 2_0 signaling may have one dedicated head region (head) added before N consecutive SFI indexes to indicate the periodicity or duration of the radio frames indicated by the following N consecutive SFI indexes. Alternatively, the extended DCI format 2_0 signaling may have one dedicated head region (head) added before each SFI index of the N SFI indexes to indicate the periodicity or duration of the radio frame indicated by the following one SFI index. Alternatively, the periodicity or duration of the extended radio frame may be carried in the first signaling. For example, the RRC configuration is modified by adding a field to the current SFI information to indicate the slot format combinations for multiple radio frames, as shown below:

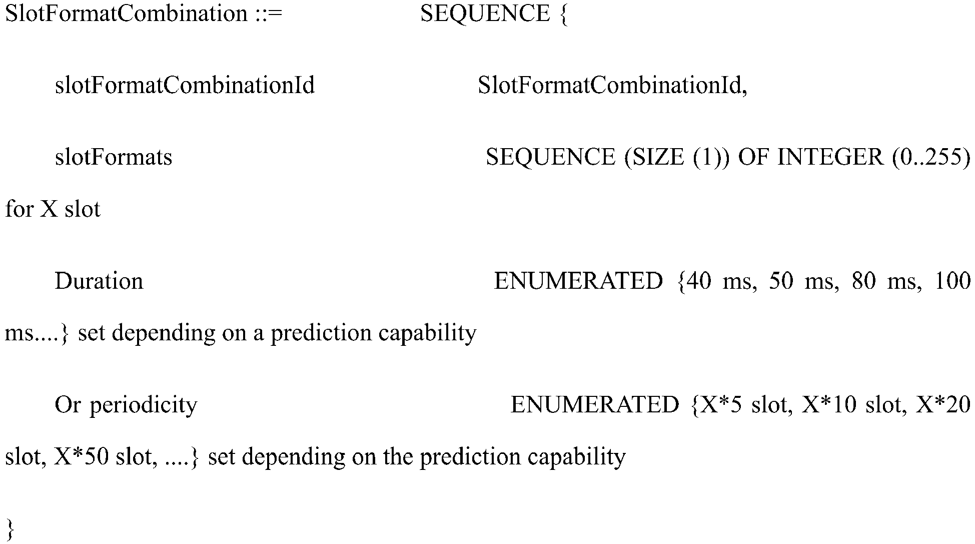

Additionally, the periodicity or duration of the extended radio frame may be configuration information for the UE or configuration information for the cell. That is to say, the periodicity or duration of the extended radio frame may be configured for a particular UE or for the serving cell. For example, the periodicity or duration of the extended radio frame may be added to SlotFormatCombinationPerCell, and this unified periodicity may be applied to all slotFormatCombinations, as shown below:

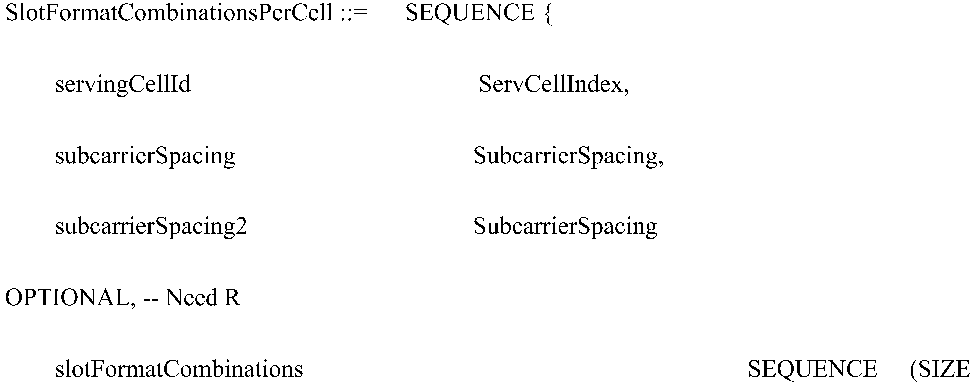

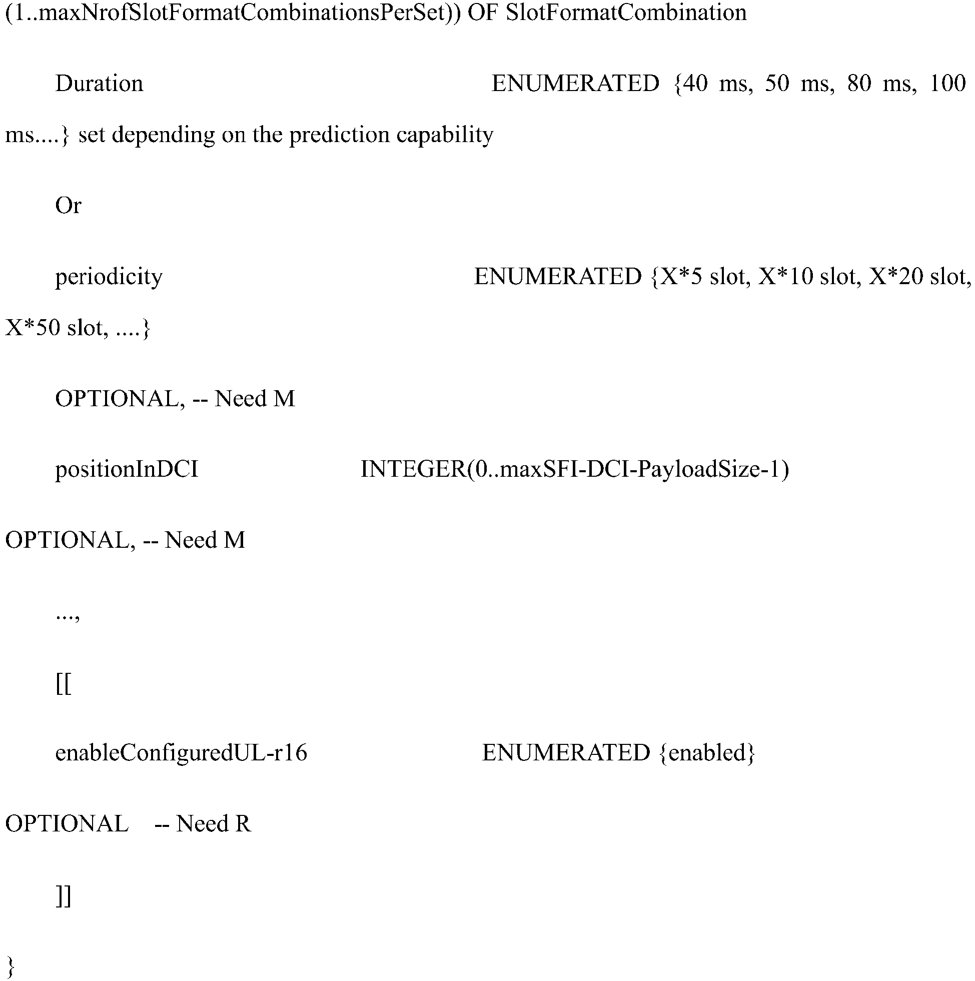

In the case where the first signaling is the common signaling for configuring the dynamic dedicated frame structure, since the enhanced frame structure length information includes the periodicity or duration of the extended radio frame, the periodicity or duration of the radio frame can be increased, which breaks the limitation that the length of multiple slot formats in a slot combination must be greater than a blind detection periodicity of the SFI. That is to say, a smaller slot format length may be configured to achieve a longer SFI indication. Specifically, a blind detection periodicity of the first signaling is a greater value between the periodicity or duration of the extended radio frame and a preset blind detection periodicity of the first signaling. After the periodicity or duration of the extended radio frame is configured, even if the blind detection periodicity of the SFI is reached, blind detection and monitoring on a corresponding monitor occasion (MO) of the SFI within the periodicity or duration may be ignored. When the first blind detection periodicity of the SFI after the configured periodicity or duration is reached, a new SFI is triggered. In this case, the actual blind detection periodicity of the SFI is the greater value between the preset blind detection periodicity of the SFI and the periodicity or duration of the extended radio frame. If no new SFI is detected at the first blind detection periodicity of the SFI after the configured periodicity or duration, a preset behavior still follows the frame structure configuration within the previous periodicity, and the smaller value between the periodicity or duration of the extended radio frame and the preset blind detection periodicity of the SFI may be used as a new blind detection periodicity of the SFI to perform SFI detection.

FIG. 8 is another flowchart of an enhanced frame structure configuration method according to an embodiment of the present application. As shown in FIG. 8, the enhanced frame structure configuration method of this embodiment includes S810 and S820.

In S810, first signaling sent by a base station is detected, where the first signaling is configured with enhanced frame structure length information, and the enhanced frame structure length information includes information for indicating a time domain length of a radio frame.

The enhanced frame structure configuration method of this embodiment is used for a UE to perform data transmission based on an enhanced frame structure length configured by the base station, where the enhanced frame structure length is a more flexible time domain length of the radio frame, so that the radio frame can have a longer time domain length. With the introduction of AI/ML technologies, traffic within a longer time can be predicted based on the AI/ML technologies. Therefore, the radio frame is configured with the longer time domain length so that traffic scheduling can be more flexible. The enhanced frame structure configuration method of this embodiment is applied to the UE, and the UE acquires the signaling sent by the base station to acquire the enhanced frame structure length configured by the base station for the UE and then performs data receiving or sending based on the enhanced frame structure length information.

The UE detects the first signaling sent by the base station, where the enhanced frame structure length information is configured in the first signaling, and the enhanced frame structure length information includes the information for indicating the time domain length of the radio frame. The enhanced frame structure length information is configured by the base station. The first signaling may be any control signaling sent by the base station to the UE. Alternatively, the first signaling is signaling information carried in other forms in data sent by the base station to the UE. The enhanced frame structure length information may be carried in the first signaling in different forms. For example, a new field is configured in the first signaling, a new parameter value is configured in an existing field of the first signaling, or an additional dedicated region is set at the head of the first signaling. The enhanced frame structure length information is used for indicating the time domain length of the radio frame. As can be known from the preceding description, the frame structure length of the radio frame may be indicated in multiple forms such as a pattern, a time domain length, and a slot format combination. Therefore, in this embodiment, the enhanced frame structure length, that is, the longer time domain length of the radio frame, may be indicated through an extension of any one of the preceding indication forms of the radio frame structure length. In the preceding embodiment, various different indication methods for the enhanced frame structure length have been described in detail. The enhanced frame structure length information is different from information for indicating the frame structure length in the current wireless communication system. The enhanced frame structure length information can indicate the radio frame with the longer time domain length and thus can support longer time domain traffic prediction.

The configuration of the enhanced frame structure length information in the first signaling may be triggered by the base station, that is, performed to match the long-period traffic prediction of the base station. AI/ML may be a UE-side model, that is, the UE performs traffic prediction. Moreover, the UE may estimate a long-period slot format and then feed back the estimated long-period slot format to the base station. After receiving prediction information about the long-period slot format from the UE, the base station configures the enhanced frame structure length information in the first signaling based on information fed back by UEs. Therefore, before S810, the following may be further included: predicting the long-period slot format; and sending prediction information about the long-period slot format to the base station.

In S820, data receiving or data sending is performed based on the enhanced frame structure length information.

After configuring the enhanced frame structure length information in the first signaling, the base station may send the first signaling to the UE. Since the enhanced frame structure length information is configured in the first signaling, the UE that receives the first signaling can determine the time domain length of the radio frame based on the enhanced frame structure length information and perform the data receiving or the data sending based on the enhanced frame structure length information. Since the enhanced frame structure length information is more flexible than a conventional radio frame length indication in a 5G system and supports the longer time domain length, when the communication system uses the AI/ML technologies for traffic prediction within a longer time, the radio frame with the longer time domain length can be used to match a result of the longer time domain traffic prediction. Therefore, the enhanced frame structure configuration method of this embodiment provides support for traffic applications of a mobile communication system within a longer time range.

In the enhanced frame structure configuration method of this embodiment, the first signaling sent by the base station is detected, where the enhanced frame structure length information is configured in the first signaling, and the enhanced frame structure length information includes the information for indicating the time domain length of the radio frame, and then the data receiving or the data sending is performed based on the enhanced frame structure length information, so that a more flexible strategy for configuring the time domain length of the radio frame is provided, the radio frame with the longer time domain length can be supported, and traffic can be supported with a flexible time domain length of the radio frame.

Identical to those in the embodiment shown in FIG. 5, specific configuration manners for the first signaling in the case where the first signaling is different signaling have been described in detail in the preceding embodiment, and the details are not repeated here.

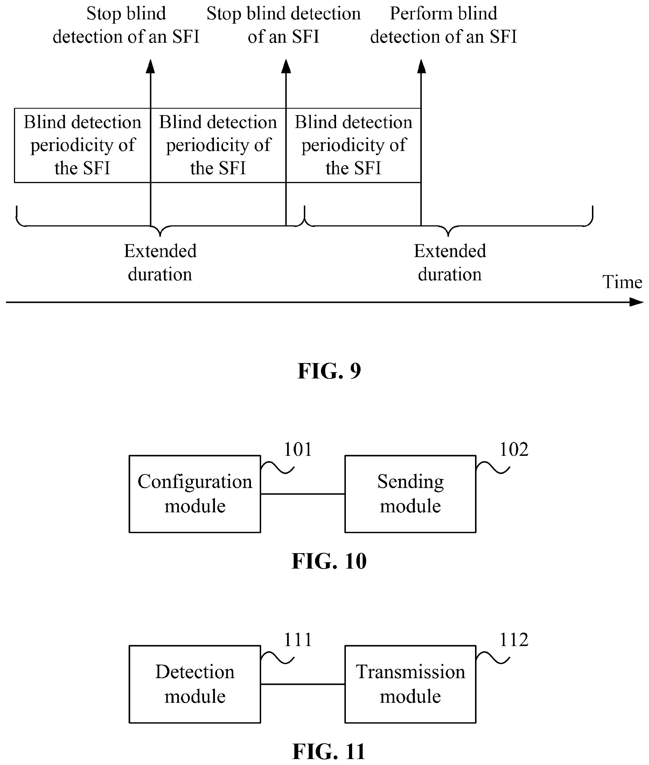

When the first signaling is common signaling for configuring a dynamic dedicated frame structure, after the first signaling sent by the base station is detected, the method further includes using a greater value between a periodicity or duration of an extended radio frame and a preset blind detection periodicity of the first signaling as a blind detection periodicity of the first signaling. After the greater value between the periodicity or duration of the extended radio frame and the preset blind detection periodicity of the first signaling is used as the blind detection periodicity of the first signaling, the method further includes, in response to using the periodicity or duration of the extended radio frame as the blind detection periodicity of the first signaling and no new first signaling being detected at the first blind detection periodicity, using a smaller value between the periodicity or duration of the extended radio frame and the preset blind detection periodicity of the first signaling as a new blind detection periodicity of the first signaling. FIG. 9 is a schematic diagram of the blind detection periodicity of the first signaling. As shown in FIG. 9, with the duration of the extended radio frame as an example, after the extended duration is carried in the first signaling, if the end of an original blind detection periodicity of the SFI is still within this extended duration, the blind detection of the SFI is stopped, and the blind detection of the SFI is performed until the first blind detection periodicity of the SFI in the next extended duration is reached.

FIG. 10 is a diagram illustrating the structure of an enhanced frame structure configuration apparatus according to an embodiment of the present application. As shown in FIG. 10, the enhanced frame structure configuration apparatus of this embodiment includes a configuration module 101 and a sending module 102.

The configuration module 101 is configured to configure enhanced frame structure length information in first signaling, where the enhanced frame structure length information includes information for indicating a time domain length of a radio frame. The sending module 102 is configured to send the first signaling to a UE.

The enhanced frame structure configuration apparatus of this embodiment is disposed in a base station and configured to perform the enhanced frame structure configuration method of the embodiment shown in FIG. 5 and has implementation principle and technical effects similar to those of the enhanced frame structure configuration method. The details are not repeated here.

FIG. 11 is a diagram illustrating the structure of an enhanced frame structure configuration apparatus according to an embodiment of the present application. As shown in FIG. 11, the enhanced frame structure configuration apparatus of this embodiment includes a detection module 111 and a transmission module 112.

The detection module 111 is configured to detect first signaling sent by a base station, where the first signaling is configured with enhanced frame structure length information, and the enhanced frame structure length information includes information for indicating a time domain length of a radio frame. The transmission module 112 is configured to perform data receiving or data sending based on the enhanced frame structure length information.

The enhanced frame structure configuration apparatus of this embodiment is disposed in a UE and configured to perform the enhanced frame structure configuration method of the embodiment shown in FIG. 8 and has implementation principle and technical effects similar to those of the enhanced frame structure configuration method. The details are not repeated here.

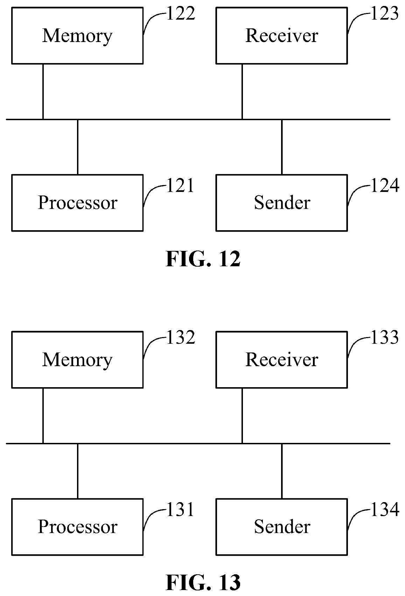

FIG. 12 is a diagram illustrating the structure of an enhanced frame structure configuration device according to an embodiment of the present application. As shown in FIG. 12, the enhanced frame structure configuration device includes a processor 121, a memory 122, a receiver 123, and a sender 124. One or more processors 121 may be provided in the enhanced frame structure configuration device, with one processor 121 shown as an example in FIG. 12. The processor 121, the memory 122, the receiver 123, and the sender 124 in the enhanced frame structure configuration may be connected via a bus or in other manners. In FIG. 12, the connection via a bus is shown as an example.

As a computer-readable storage medium, the memory 122 may be configured to store software programs, computer-executable programs, and modules, for example, program instructions/modules (the configuration module 101 and the sending module 102) corresponding to the enhanced frame structure configuration method of the embodiment shown in FIG. 5 of the present application. The processor 121 is configured to execute the software programs, instructions, and modules stored in the memory 122 to perform various functions and data processing of the enhanced frame structure configuration device, that is, to implement the preceding enhanced frame structure configuration method.

The memory 122 may mainly include a program storage region and a data storage region, where the program storage region may store an operating system and an application program required by at least one function, and the data storage region may store data created according to the use of the enhanced frame structure configuration device. Additionally, the memory 122 may include a high-speed random-access memory and may further include a non-volatile memory such as at least one magnetic disk memory, a flash memory, or another non-volatile solid-state memory.

The receiver 123 is any device/module having a data receiving capability or a combination of multiple devices/modules having the data receiving capability. The sender 124 is any device/module having a data sending capability or a combination of multiple devices/modules having the data sending capability.

FIG. 13 is another diagram illustrating the structure of an enhanced frame structure configuration device according to an embodiment of the present application. As shown in FIG. 13, the enhanced frame structure configuration device includes a processor 131, a memory 132, a receiver 133, and a sender 134. One or more processors 131 may be provided in the enhanced frame structure configuration device, with one processor 131 shown as an example in FIG. 13. The processor 131, the memory 132, the receiver 133, and the sender 134 in the enhanced frame structure configuration device may be connected via a bus or in other manners. In FIG. 13, the connection via a bus is shown as an example.

As a computer-readable storage medium, the memory 132 may be configured to store software programs, computer-executable programs, and modules, for example, program instructions/modules (the detection module 111 and the transmission module 112) corresponding to the enhanced frame structure configuration method of the embodiment shown in FIG. 8 of the present application. The processor 131 is configured to execute the software programs, instructions, and modules stored in the memory 132 to perform various functions and data processing of the enhanced frame structure configuration device, that is, to implement the preceding enhanced frame structure configuration method.

The memory 132 may mainly include a program storage region and a data storage region, where the program storage region may store an operating system and an application program required by at least one function, and the data storage region may store data created according to the use of the enhanced frame structure configuration device. Additionally, the memory 132 may include a high-speed random-access memory and may further include a non-volatile memory such as at least one magnetic disk memory, a flash memory, or another non-volatile solid-state memory.

The receiver 133 is any device/module having a data receiving capability or a combination of multiple devices/modules having the data receiving capability. The sender 134 is any device/module having a data sending capability or a combination of multiple devices/modules having the data sending capability.

An embodiment of the present application provides a storage medium including computer-executable instructions. The computer-executable instructions, when executed by a computer processor, cause the processor to perform an enhanced frame structure configuration method. The method includes: configuring enhanced frame structure length information in first signaling, where the enhanced frame structure length information includes information for indicating a time domain length of a radio frame; and sending the first signaling to a UE.

An embodiment of the present application provides a storage medium including computer-executable instructions. The computer-executable instructions, when executed by a computer processor, cause the processor to perform an enhanced frame structure configuration method. The method includes: detecting first signaling sent by a base station, where the first signaling is configured with enhanced frame structure length information, and the enhanced frame structure length information includes information for indicating a time domain length of a radio frame; and performing data receiving or data sending based on the enhanced frame structure length information.

## Claims

1. An enhanced frame structure configuration method, comprising:
configuring enhanced frame structure length information in first signaling, wherein the enhanced frame structure length information comprises information for indicating a time domain length of a radio frame; and
sending the first signaling to a user equipment, UE.

2. The enhanced frame structure configuration method of claim 1, wherein the first signaling is common signaling for configuring a semi-static cell-specific frame structure, and the enhanced frame structure length information comprises a number N of patterns in an extended radio frame, wherein N is greater than 2.

3. The enhanced frame structure configuration method of claim 1, wherein the first signaling is dedicated signaling for configuring a semi-static UE-specific frame structure, and the enhanced frame structure length information comprises at least one of: a number M of patterns in an extended radio frame or time domain length information of the radio frame, wherein M is greater than or equal to 2.

4. The enhanced frame structure configuration method of claim 3, wherein the number of patterns in the extended radio frame is configured in a dedicated configuration or a serving cell configuration.

5. The enhanced frame structure configuration method of claim 1, wherein the first signaling is common signaling for configuring a dynamic dedicated frame structure, and the enhanced frame structure length information comprises a periodicity or duration of an extended radio frame.

6. The enhanced frame structure configuration method of claim 5, wherein the periodicity or duration of the extended radio frame is located in a dedicated head region of the first signaling.

7. The enhanced frame structure configuration method of claim 6, wherein the periodicity or duration of the extended radio frame in the dedicated head region of the first signaling is used for indicating a periodicity or duration of a slot format combination for at least one consecutive radio frame.

8. The enhanced frame structure configuration method of any one of claims 5 to 7, wherein the periodicity or duration of the extended radio frame is configuration information for the UE or configuration information for a cell.

9. The enhanced frame structure configuration method of any one of claims 5 to 7, wherein a blind detection periodicity of the first signaling is a greater value between the periodicity or duration of the extended radio frame and a preset blind detection periodicity of the first signaling.

10. The enhanced frame structure configuration method of any one of claims 1 to 7, before configuring the enhanced frame structure length information in the first signaling, further comprising:
receiving prediction information about a long-period slot format from the UE.

11. An enhanced frame structure configuration method, comprising:
detecting first signaling sent by a base station, wherein the first signaling is configured with enhanced frame structure length information, and the enhanced frame structure length information comprises information for indicating a time domain length of a radio frame; and
performing data receiving or data sending based on the enhanced frame structure length information.

12. The enhanced frame structure configuration method of claim 11, wherein the first signaling is common signaling for configuring a semi-static cell-specific frame structure, and the enhanced frame structure length information comprises a number N of patterns in an extended radio frame, wherein N is greater than 2.

13. The enhanced frame structure configuration method of claim 11, wherein the first signaling is dedicated signaling for configuring a semi-static user equipment, UE, -specific frame structure, and the enhanced frame structure length information comprises at least one of: a number M of patterns in an extended radio frame or time domain length information of the radio frame, wherein M is greater than or equal to 2.

14. The enhanced frame structure configuration method of claim 13, wherein the number of patterns in the extended radio frame is configured in a dedicated configuration or a serving cell configuration.

15. The enhanced frame structure configuration method of claim 11, wherein the first signaling is common signaling for configuring a dynamic dedicated frame structure, and the enhanced frame structure length information comprises a periodicity or duration of an extended radio frame.

16. The enhanced frame structure configuration method of claim 15, wherein the periodicity or duration of the extended radio frame is located in a dedicated head region of the first signaling.

17. The enhanced frame structure configuration method of claim 16, wherein the periodicity or duration of the extended radio frame in the dedicated head region of the first signaling is used for indicating a periodicity or duration of a slot format combination for at least one consecutive radio frame.

18. The enhanced frame structure configuration method of any one of claims 15 to 17, wherein the periodicity or duration of the extended radio frame is configuration information for a UE or configuration information for a cell.

19. The enhanced frame structure configuration method of any one of claims 15 to 17, after detecting the first signaling sent by the base station, further comprising:
using a greater value between the periodicity or duration of the extended radio frame and a preset blind detection periodicity of the first signaling as a blind detection periodicity of the first signaling.

20. The enhanced frame structure configuration method of claim 19, after using the greater value between the periodicity or duration of the extended radio frame and the preset blind detection periodicity of the first signaling as the blind detection periodicity of the first signaling, further comprising:
in response to using the periodicity or duration of the extended radio frame as the blind detection periodicity of the first signaling and no new first signaling being detected at a first blind detection periodicity, using a smaller value between the periodicity or duration of the extended radio frame and the preset blind detection periodicity of the first signaling as a new blind detection periodicity of the first signaling.

21. The enhanced frame structure configuration method of any one of claims 11 to 17, before detecting the first signaling sent by the base station, further comprising:
predicting a long-period slot format; and
sending prediction information about the long-period slot format to the base station.

22. An enhanced frame structure configuration device, comprising:
a memory configured to store a program; and
a processor configured to execute the program to perform the enhanced frame structure configuration method of any one of claims 1 to 10.

23. An enhanced frame structure configuration device, comprising:
a memory configured to store a program; and
a processor configured to execute the program to perform the enhanced frame structure configuration method of any one of claims 11 to 21.

24. A non-volatile storage medium, comprising a stored program, wherein the program is executed so that the enhanced frame structure configuration method of any one of claims 1 to 10 or claims 11 to 21 is performed.
